# EUROPEAN PATENT APPLICATION

(11) **EP 1 914 898 A1**
(43) Date of publication of application: **23.04.2008**
(21) Application number: 06021631.4
(22) Date of filing: 16.10.2006
(51) Int. Cl.: H04B 1/10, H04B 1/69, H04L 27/26, H04L 25/03

(54) **Method and apparatus for detecting narrowband interferences within a multi-carrier signal, in particular an OFDM modulated UWB signal**

(71) Applicant: STMicroelectronics N.V., 1118 BH Schiphol Airport Amsterdam (NL)
(72) Inventor: Berens, Friedbert, 1202 Geneva (CH); Rüegg, Andreas, 4105 Biel-Benken (CH)
(74) Representative: Zapalowicz, Francis

(57) **Abstract**

The method of processing an incident multi-carrier signal comprises receiving said incident signal (ISG) and performing a reception processing including an equalization processing (13) providing a first signal (AUX). It further comprises detecting (16) eventual interferences within said incident signal, said interferences detecting being performed in the frequency domain on a second signal obtained from said first signal.

## Description

The invention relate to the wireless communication systems, and more particularly to the detection of interferences within a multi-carriers modulated signal.

A non-limitative application of the invention is directed to devices operating according to the Ultra Wide Band (UWB) standard based on a multi-band OFDM (Orthogonal Frequency-Division Multiplexing) modulation scheme, called MB-OFDM, which can generate interferences towards other wireless systems, and particularly a WIMAX device which is a fix wireless device (Worldwide Interoperability for Microwave Access). Such a WIMAX device operates for example with a band width of 20 MHz at a central frequency of 3,5 GHz, whereas the frequency band of the MB-OFDM system lies between 3,1 and 10,6 GHz.

Orthogonal frequency-Division Multiplexing (OFDM) is a method of digital modulation in which a signal is split into several narrowband channels (sub-carriers) at different frequencies;

Wireless personal area networks based on OFDM and UWB technologies like the MB-OFDM standard will directly interfere to narrowband systems which are close to such wide band devices.

Due to the very limited TX power of the UWB systems the range, in which the generated interference will cause a degradation in another system is limited to some meters around the UWB device. Such another system operating in this area will also generate interference towards the UWB system in operation and thus leads to a degradation of the communication performance.

Thus future robust implementations of UWB systems need to take that into account in order to optimize the performance of their own communication and to reduce the interference potential towards another service to a minimum. In order to be able to reduce the interference potential in a dynamic way the signal of said another system and thus the interference produced by this system towards the UWB system needs to be detected and identified.

For detecting interferences at an UWB receiver, a well known detection technique, based on power measurements on the different OFDM carriers, works very well in the absence of an UWB signal, i.e. during silence periods. However, those silence periods are not always available and are a constraint for the UWB system. In the case of superposition of an UWB signal and interferences, this well known detection technique suffers severely because of the signal degradation due to the channel modifying the power spectrum and this especially when the UWB transmitter is close and its signal is strong. Further, the power peak of the interferer, for example a narrowband interferer, may be hidden in a fading region and decisively degrades the detection quality of the mentioned power spectrum technique.

According to an embodiment, it is proposed a method and an apparatus which enhances significantly the detection quality, in particular when an interferer is super-imposed with an UWB signal.

According to an aspect, it is proposed a method of processing an incident multi-carriers modulated signal, comprising receiving said incident signal and performing a reception processing including an equalization processing providing a first signal.

According to a general feature of this aspect, the method further comprises detecting eventual interferences within said incident signal, said interferences detecting being performed in the frequency domain on a second signal obtained from said first signal.

In other words, the detection mechanism according to this aspect is based on a signal, called here "second signal", which is delivered at a point in the receiving chain located after compensation of the channel for example directly after equalization or for example after demapping. An equalization flattens the channel and marks of interference appear much better recognizable.

When the interferences detecting step is performed directly after equalization, said second signal is equal to said first signal, i.e. the signal provided by the equalization processing.

When at least another processing, for example a demapping, is performed between the equalization processing and the interferences detecting step, the second signal on which said interference detecting step is performed, is thus different from said first signal (i.e. the signal provided by the equalization processing) but still obtained from said first signal.

According to an embodiment in which said second signal comprises digital information, for example so-called "soft" values or "soft" symbols, said interference detecting comprises determining statistic data from said digital information and processing said statistic data.

According to an embodiment, in which said incident signal carries symbols, said statistic data are mean values and/or variance values computed over a sliding time-window of consecutive symbols for each carrier independently.

According to an embodiment, processing said statistic data comprises selecting a group of at least some of said sub-carriers, calculating an average value of the statistic data respectively associated to said selected sub-carriers, comparing one statistic data with said average value, thereby deciding whether interferences exist within the sub-carrier associated to said one statistic data.

Said incident signal may be a signal modulated according to an OFDM modulation scheme, for example according to a MB-OFDM modulation scheme.

Said incident signal may also be a signal modulated according to a generalized multi-carriers (GMC) modulation scheme in which the sub-carriers are not necessarily orthogonal.

According to another aspect, it is also proposed an apparatus comprising input means adapted to receive an incident multi-carriers modulated signal and reception processing means coupled to said input means and including equalization means adapted to deliver a first signal.

Said apparatus further comprises detecting means coupled to the output of said equalization means for receiving a second signal in the frequency domain obtained from said first signal and adapted to perform a digital detection process on said second signal for detecting eventual interferences within said incident signal.

Said detecting means may be directly or indirectly coupled to the output of said equalization means.

According to an embodiment, said second signal comprises digital information, and said detecting means comprises computing means adapted to compute statistic data from said digital information and auxiliary processing means adapted to process said statistic data.

According to an embodiment, said incident signal carries symbols and computing means are adapted to compute as said statistic data, mean values and/or variance values over a sliding time-window of consecutive symbols for each sub-carrier independently.

According to another embodiment, said auxiliary processing means comprises:
- selection means adapted to select a group of at least some of said sub-carriers,
- calculation means adapted to calculate an average value of the statistic data respectively associated to said selected sub-carriers,
- comparison means adapted to compare one statistic data with said average value, thereby deciding whether interferences exists within the sub-carrier associated to said one statistic data.

Other advantages and features of the invention will appear on examining the detailed description of embodiments, these being in no way limiting, and of the appended drawings in which:
- figure 1 illustrates diagrammatically a flow chart related to a processing method allowing detection of eventual interferences within an incident signal,
- figure 2 illustrates diagrammatically an embodiment of an apparatus allowing detection of eventual interferences within an incident signal,

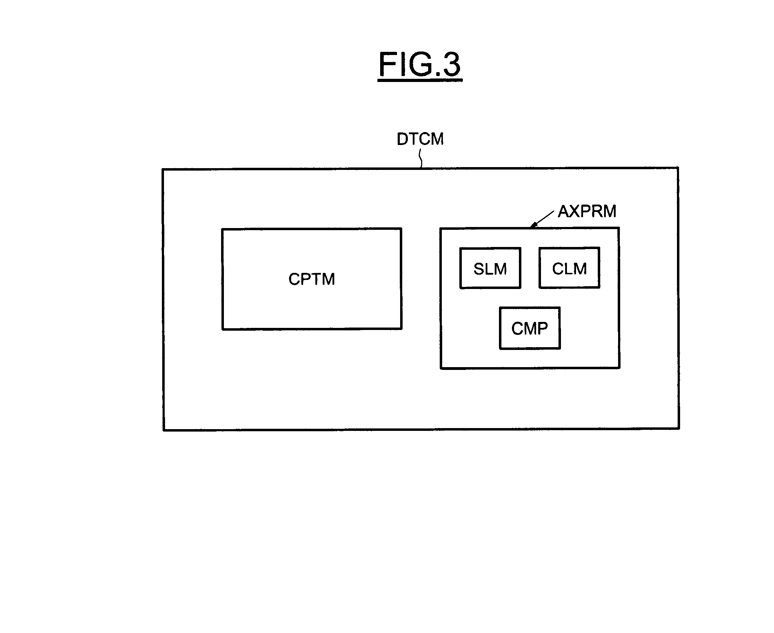

- figure 3 illustrate more in details, but still diagrammatically, a possible embodiment of detection means including in an apparatus of figure 2,
- figures 4 and 5 illustrate more detailed flow charts, and,
- figure 6 illustrates curves showing interferences.

This embodiment will be now described in relation with MB-OFDM systems, although the invention is not limited to this particular application.

Conventionally, a MB-OFDM digital base-band symbol is composed of 128 sub-carriers (corresponding to data, pilots, etc.). The transmitted data is generated by computing the IFFT (Inverse Fast Fourier Transform) of 128 frequency-domain digital base-band samples.

Conventionally a MB-OFDM transmitter comprises a digital base-band stage coupled to an analog radio frequency stage by a digital-to-analog conversion stage DAC.

More precisely, in a conventional manner, the transmission chain of such a transmitter comprises an encoder, for example a convolutional encoder, receiving data from source coding means and delivering a bits stream to puncturing means which delivers a punctured bits streams.

Interleaving means are connected to the output of the puncturing means and are followed by mapping means which map the bits into symbols according to a modulation mapping scheme depending on the kind of used modulation, for example a BPSK modulation or more generally a QAM modulation.

The successive symbols delivered by the mapping means are MB-OFDM digital base-band symbols. Each symbol is a group containing 128 modulation coefficients respectively associated to 128 sub-carriers to be modulated accordingly.

Of course, a group of 128 samples (modulation coefficients) is delivered on the so-called I branch whereas another corresponding group of 128 samples is delivered on the so-called Q branch.

These successive frequency-domain groups of digital modulation coefficients are then converted in the time domain by IFFT means.

The delivered time-domain symbols are then processed in a conventional radio frequency stage after having been converted into the DAC stage, and before being transmitted on air through an antenna.

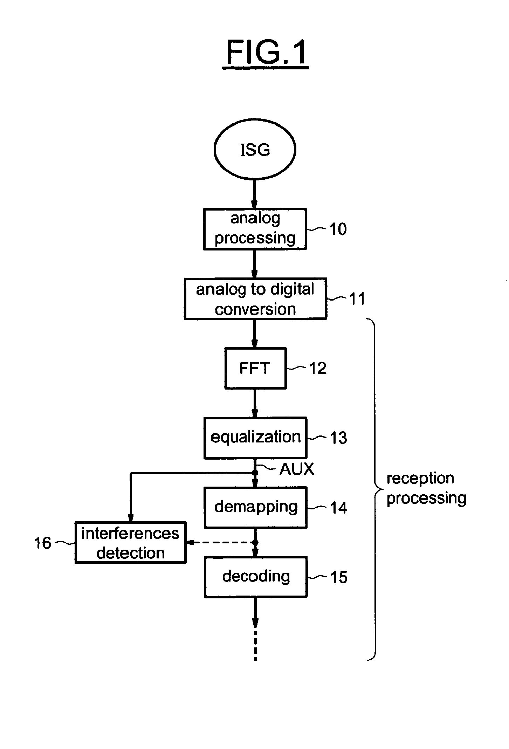

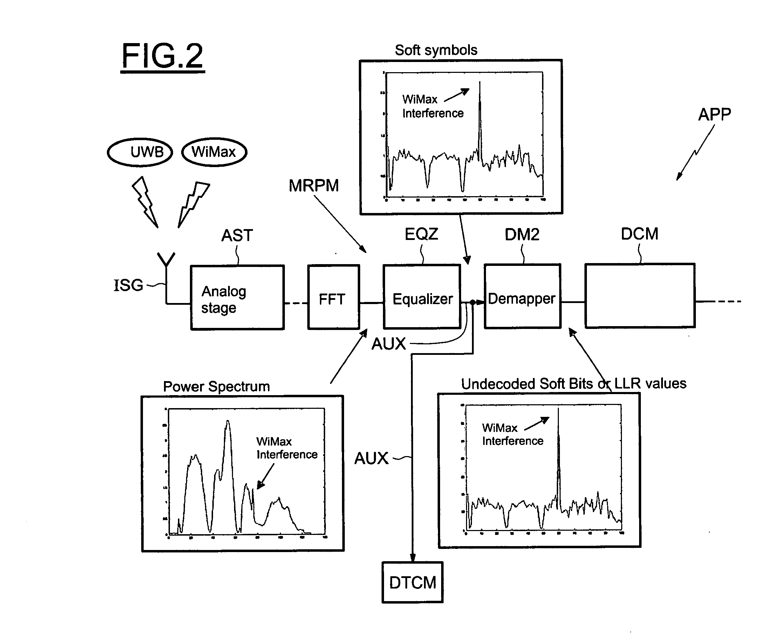

As illustrated in figure 1 and in figure 2, an incident signal ISG is received by the wireless apparatus APP. The signal ISG is processed (10, figure 1) within a conventional analog stage AST.

After an analog-to-digital conversion 11, a Fast Fourier Transform 12 is performed within FFT means in order to obtain a signal in the frequency domain.

The reception processing means MRPM further comprises an equalizer EQZ performing an equalization processing 13 for providing a first signal AUX.

The reception processing means MRPM further comprise a demapper DMP performing a demapping 14, and decoding means DCM performing a decoding process 15.

All the means of the main reception processing means MRPM are conventional means well known per se by the man skilled in the art.

The apparatus APP further comprises detection means DTCM coupled to the output of the equalization means. The detection means are adapted to receive the signal AUX in the frequency domain and are adapted to perform a digital detection process 16 on said signal AUX for detecting eventual interferences within the incident signal ISG.

In the present example, the interfering signal is assumed to become from a WIMAX device, although the invention is not limited to such interfering signal.

The signal AUX comprises digital information which are here "soft" symbols. One soft symbol is carried by one sub-carrier and a complete soft MB-OFDM symbol includes all the 128 soft symbols respectively associated to the 128 sub-carriers. If the signal AUX is taken at the output of the demapper the digital information are "soft" values or LLR values (LLR: Log Likelihood Ratio) .As it is well known by the man skilled in the art, a "soft" or LLR value comprises a sign which represents the logical value of the digital value and the magnitude represents a confidence in this logical value. An above mentioned soft symbol is in general a complex value and contains more than one soft value depending on the kind of modulation.

The interference detection process is advantageously based on digital information after equalization, demapping, or at another point in the receiver chain, after compensation of the channel. As a matter of fact the equalization flattens the channel and marks of interference appear much better recognizable with respect to a detection based on the power spectrum before equalization as illustrated in figure 2.In this figure each diagram is in the frequency domain and corresponds to a complete MB-OFDM symbol with 100 used sub-carriers data averaged over the time using a sliding window approach.

Further, the use of soft symbols before demapping shows a very good performance and in many cases its handling is more flexible and simple than a use of soft values or LLR values after demapping. If the detection process is performed on the soft constellation points after demapping, all the LLR values coming from the same constellation point (e.g. 4 values in the case of 16-QAM) can be averaged to have one single detection value representing one sub-carrier.

For continuous detection in time, looking at the evolution in time of statistic data for each sub-carrier independently, is advantageous.

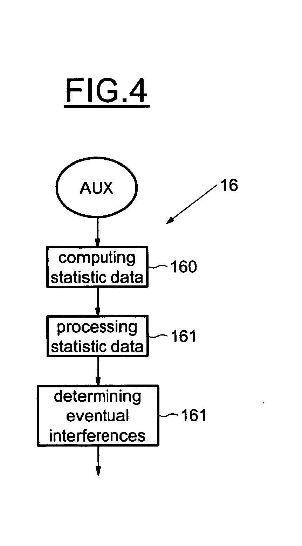

In such a case, as illustrated in figure 4, the interference detection processing 16 comprises computing (step 160) statistic data from the signal AUX, processing (161) said statistic data and determining eventual interferences (162).

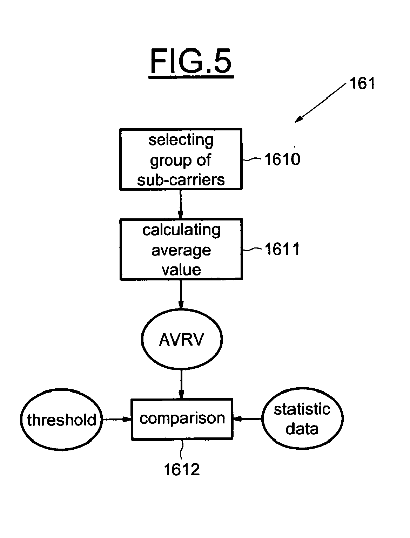

An example of processing 161 is illustrated in figure 5.

It is based on statistic data.

The statistic data are for example mean and/or variance computations over a sliding time-window of consecutive MB-OFDM symbols, computed in each sub-carrier independently. At each instant the statistic data of one sub-carrier can be compared (1612 figure 5) to the average of the statistic data over the whole frequency band, i.e. all the sub-carriers. A detection threshold (sub-carrier divided by average ratio) shall decide whether on a given sub-carrier at a given time instant interference exists. A detection threshold is for example 8 dB. Observing those decisions gives the system a global view of interferers.

Both proposed types of statistic data are much more powerful for detecting interference than the simple power estimation at the direct output of the FFT (i.e. before equalization) in the case of an operational UWB link. However, simulation results show that the variance estimation is more stable and therefore a more reliable metric than the mean.

The average value (of mean or variance) over the sub-carriers can either be computed (1611 figure 5) taking into account all the sub-carriers or a selection only (1610 figure 5). If an a priori known restricted frequency range for interference exists, the values of these sub-carriers can be excluded. Another possibility could be to leave out the x biggest values (x being a predefined number, e.g. 3).

For performing the processing 161, the detection means DTCM comprise computing means CPTM adapted to compute statistic data and auxiliary processing means AXPRM adapted to process the statistic data.

More precisely, the auxiliary processing means AXPRM comprise selection means SLM adapted to select a group of at least some of said sub-carriers, calculation means CLM adapted to calculate an average value AVRV of the statistic data respectively associated to selected sub-carriers, and comparison means CMP adapted to compare one statistic data with said average value using a detection threshold equal for example to 8 dB, thereby deciding whether interferences exist within the sub-carrier associated to said one statistic data.

Further the power of the interferer in the signal can be easily obtained from the variance values by using a proportionality coefficient depending on the architecture of the receiving chain.

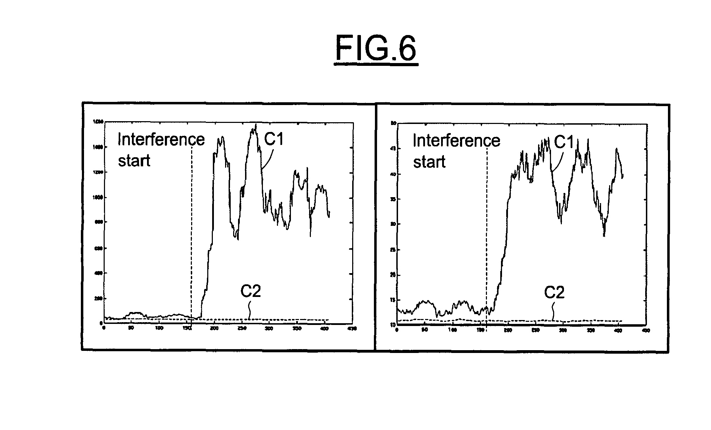

On figure 6, a symbol-by-symbol sliding window of size 30 (OFDM) symbols is used. The left part of figure 6 illustrates the windowed variance over time. The straight line (curve C1) corresponds to a sub-carrier with starting interference after about 200 OFDM symbols, whereas the dashed line (curve C2) represents the average variance over almost all sub-carriers.

The right part of figure 6 illustrates the windowed mean over time. The straight line (curve C1) corresponds to a sub-carrier with starting interference after about 200 OFDM symbols, whereas the dashed line (curve C2) represents the average mean over almost all sub-carriers.

## Claims

1. Method of processing an incident multi-carriers modulated signal, comprising receiving said incident signal and performing a reception processing including an equalization processing providing a first signal, **characterized by** the fact that it further comprises detecting (16) eventual interferences within said incident signal, said interferences detecting being performed in the frequency domain on a second signal (AUX) obtained from said first signal.

2. Method according to claim 1, wherein said second signal is said first signal.

3. Method according to claim 1, wherein said reception processing includes a demapping processing after said equalization processing, said demapping processing providing said second signal.

4. Method according to any one of the preceding claims, wherein said second signal comprises digital information, and said interference detecting comprises determining statistic data from said digital information and processing (161) said statistic data.

5. Method according to claim 4, wherein said incident signal carries symbols and said statistic data are mean values and/or variance values computed over a sliding time-window of consecutive symbols for each sub-carrier independently.

6. Method according to claim 4 or 5, wherein processing said statistic data comprises selecting (1610) a group of at least some of said sub-carriers, calculating (1611) an average value of the statistic data respectively associated to said selected sub-carriers, comparing (1612) at least one statistic data with said average value using a detection threshold, thereby deciding whether interferences exists within the frequency sub-band corresponding to the sub-carrier associated to said one statistic data.

7. Method according to any one of the preceding claims, wherein said incident signal is a signal modulated according to an OFDM modulation scheme.

8. Method according to claim 7, wherein said signal is an UWB signal modulated according to a MB-OFDM modulation scheme.

9. Method according to any one of claims 1 to 6, wherein said incident signal is a signal modulated according to a generalized multi-carriers modulation scheme.

10. Apparatus comprising input means adapted to receive an incident multi-carriers modulated signal and reception processing means coupled to said input means and including equalization means adapted to deliver a first signal, **characterized by** the fact that said apparatus further comprises detecting means (DTCM) coupled to the output of said equalization means for receiving a second signal (AUX) in the frequency domain obtained from said first signal and adapted to perform a digital detection process on said second signal for detecting eventual interferences within said incident signal.

11. Apparatus according to claim 10, wherein said detecting means is directly coupled to the output of said equalization means.

12. Apparatus according to claim 10 or 11, wherein said second signal comprises digital information, and said detecting means comprises computing means (CPTM) adapted to compute statistic data from said digital information and auxiliary processing means (AXPRM) adapted to process said statistic data.

13. Apparatus according to claim 12, wherein said incident signal carries symbols and computing means are adapted to compute as said statistic data, mean values and/or variance values over a sliding time-window of consecutive symbols for each sub-carrier independently.

14. Apparatus according to claim 12 or 13, wherein said auxiliary processing means (AXPRM) comprises selection means (SLM) adapted to select a group of at least some of said sub-carriers, calculation means (CLM) adapted to calculate an average value of the statistic data respectively associated to said selected sub-carriers, comparison means (CMP) adapted to compare at least one statistic data with said average value, thereby deciding whether interferences exists within the sub-carrier associated to said one statistic data.

15. Apparatus according to any one of claims 10 to 14, wherein said incident signal is a signal modulated according to an OFDM modulation scheme.

16. Apparatus according to claim 15, wherein said signal is an UWB signal modulated according to a MB-OFDM modulation scheme.
